# EUROPEAN PATENT SPECIFICATION

(11) **EP 0 820 066 B1**
(45) Date of publication and mention of the grant of the patent: **09.10.2002**
(21) Application number: 97305325.9
(22) Date of filing: 16.07.1997
(51) Int. Cl.: G21C 3/322, G21C 3/324

(54) **Fuel bundles and nuclear reactor using such fuel bundles**
Brennstabbündel und Kernreaktor mit Einsatz derartiger Brennstabbündel
Assemblages de combustible et réacteur nucléaire utilisant ces assemblages

(30) Priority: 19.07.1996 US 684228
(43) Date of publication of application: 21.01.1998
(73) Proprietor: GENERAL ELECTRIC COMPANY, Schenectady, NY 12345 (US)
(72) Inventor: Dix, Gary Errol, Saratoga, California 95070 (US)
(74) Representative: Pedder, James Cuthbert

(56) References cited:
- DE-A- 3 834 611
- US-A- 4 749 543
- DATABASE WPI Section Ch, Week 8447 Derwent Publications Ltd., London, GB; Class K05, AN 84-291709 XP002038520 & JP 59 180 389 A (GENSHI NENRYO KOGYO KK) , 13 October 1984
- PATENT ABSTRACTS OF JAPAN vol. 013, no. 125 (P-847), 28 March 1989 & JP 63 293490 A (HITACHI LTD;OTHERS: 01), 30 November 1988,
- PATENT ABSTRACTS OF JAPAN vol. 015, no. 158 (P-1193), 19 April 1991 & JP 03 028794 A (NUCLEAR FUEL IND LTD), 6 February 1991,

## Description

This invention relates generally to fuel bundles in boiling water nuclear reactors. More specifically, the invention relates to fuel bundles which utilize partial length fuel rods extending from the bottom of the assembly to the upper regions of the fuel assembly in which two phase steam-water flow occurs. The invention also relates to an associated fuel bundle channel having an increasing flow volume in an axial direction.

Conventional boiling water nuclear reactors have core assemblies which include many individual fuel bundle assemblies, each of which includes a lower support structure, an upper support structure and a matrix of sealed fuel rods supported between the upper and lower support structures. The fuel rods contain nuclear fuel pellets in sealed containment for supporting a required critical reaction for the generation of steam. One or more coolant rods is included in the matrix of the fuel rods and is also supported between the upper and lower support structures. A channel surrounds the end structures, fuel rods and one or more coolant rods.

During reactor operation, coolant water enters through the lower support structure within the channel and flows upwardly between the upstanding fuel rods. Water and generated steam exit through the upper support structure. The channel confines the required moderator coolant flow to a flow path that is restricted between the end structures.

Energy addition along the fuel rods converts some of the water to lower density steam. The resultant steam-water flows, referred to as two phase flows, have velocities that continue to increase upwardly in the fuel bundle as more steam is formed. Thus, if the flow area is maintained constant, much higher pressure drops occur in the upper section of the fuel bundle than in the lower section. Excess pressure drop in the fuel channels can limit the flow and power capability of the fuel.

Thermal performance of the fuel is limited by the maximum power for which normal boiling heat transfer can be obtained on all fuel rods. Beyond that limiting power, referred to as critical power, heat transfer on one or more fuel rods can deteriorate causing unacceptable temperatures.

A typical boiling water reactor channel has a constant internal flow area formed by a full length square cross section with rounded comers. Variations of the uniform thickness concept are disclosed in commonly owned U.S. Patent No. 4,749,543. The patent discloses channel designs which have reduced average thickness in the upper portion of the channels corresponding to a lower pressure difference acting on the channel sides in the upper portion of the channel. In some instances, the axial variation of the channel average thickness increases water volume adjacent the upper part of the channel to provide increased neutron moderation, to minimize the steam void reactivity coefficient, and to provide a greater cold shut-down margin.

In US Patent No. 5,809,101 filed May 29, 1996, the flow volume in the upper region of the channel is increased by decreasing the channel wall thickness from inside the channel, thus reducing the pressure drop in the upper region of the bundle.

It is also known to employ part length fuel rods (PLR's) in fuel bundle assemblies. For example, in commonly owned U.S. Patent Nos. 5,017,332; 5,112,570; and 5,416,812, PLR's are utilized which extend upwardly from the bottom of the channel (within the boiling region), but only part way to the top of the channel. In other words, these PLR's are axially shortened with respect to the remaining full length rods (FLR's) and are distributed throughout the fuel bundle, with the preferred disposition being in the interior of the bundle, away from the channel walls. The PLR's terminate at a selected spacer located in the two phase flow region of the fuel bundle assembly, and below the uppermost spacer in the bundle. Not all PLR's need be of the same length however. For example, some may terminate at one spacer, while others terminate at another spacer, upstream or downstream of the one spacer. Preferably, the length of PLR's is at least one-half of the total height of the fuel bundle.

US Patent No. 4,970,047 discloses an arrangement in which the flow channel is increased above the part length fuel rods.

This invention seeks to provide an improved fuel bundle assembly design which can provide improved critical power performance as well as pressure drop reductions.

According to the invention, there is provided a fuel bundle assembly for a nuclear reactor comprising:
An elongated, open ended channel having an interior flow area which is increased in an upper portion of the channel by means of a channel wall thickness change made in said upper portion;
a plurality of fuel rods in said channel including full length rods extending substantially the length of the channel and at least one part length fuel rod having an axial length shorter than said full length rods; and
a plurality of spacers (S_{N}) laterally supporting said full length fuel rods and said at least one part length fuel rod along respective axial lengths thereof, characterized by one of said spacers (S'₂) in an upward flow direction is the last spacer which supports said at least one part length fuel rod, said last of said spacers is located in an upper region of the channel-above the channel wall thickness change made in said-upper portion.

In the exemplary embodiment of the invention, a boiling water reactor fuel bundle assembly is provided which includes PLR's as well as increased channel internal dimensions, i.e, channel expansion, in the upper section of the bundle. The channel expansion can occur at one location or over some axial length as a taper or series of expansion steps. This invention produces a favorable effect on critical power performance by placing the channel expansion below that fuel bundle spacer closest to the top of the bundle, and which has all rods (both FLR's and -PLR's) passing through it. In other words, the bundle assembly construction is such that this spacer (which would usually be the third or fourth spacer from the top of the bundle) is located axially above the channel expansion, but is axially below the top of any and all PLR's in the bundle.

It has been found that the above arrangement of channel expansion and fuel bundle spacer relative to the PLR's in the bundle provides a large difference in flow resistance between the relatively large flow path around the perimeter of the spacer (created by the expanded channel dimension) and the restricted flow paths around rods in the interior of the spacer. This large difference in flow path resistance diverts significant flow to the periphery of the fuel assembly, and produces improvements in critical power performance.

It is to be understood that the invention includes not only fuel bundles but also *nuclear* reactors using said fuel bundles.

The invention will now be described in greater detail, by way of example, with reference to the drawings in which:
FIGURE 1 is a perspective view, partially cut away, illustrating a known fuel bundle assembly;
FIGURE 2 is a schematic partial side view of a fuel bundle in accordance with the present invention, with channel expansion at a single location; and
FIGURE 3 is a schematic partial side view of a fuel bundle in accordance with an alternative embodiment of the present invention, with tapered channel expansion.

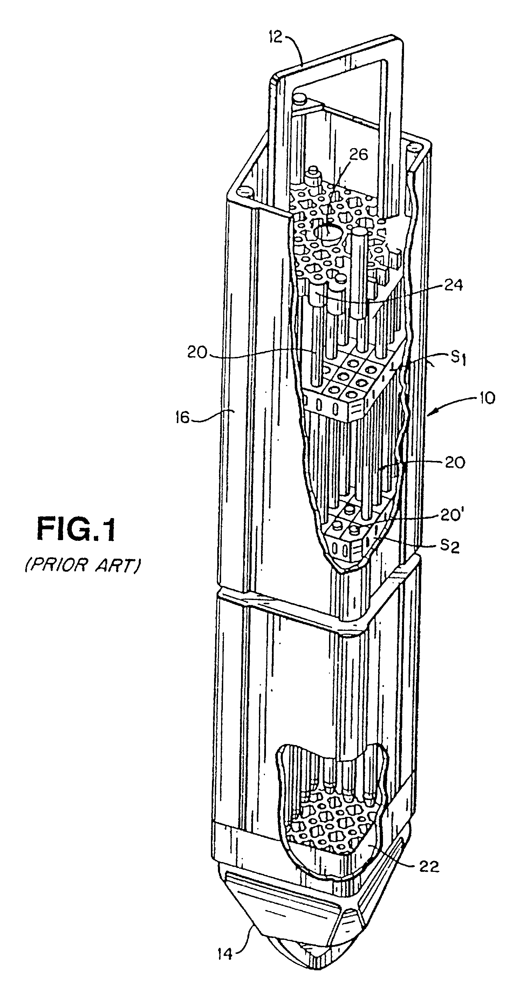

With reference now to Figure 1, a conventional fuel bundle assembly is shown at 10. It will be understood that the fuel bundle assembly is not shown in its true length, but instead is broken away so as to illustrate the bottom and top portions of the bundle only. The assembly includes an upper handle 12 and a lower nose piece 14. A channel 16 extends upwardly from the nose piece end substantially the full length of the fuel bundle assembly 10. Individual fuel rods 20 are disposed in a matrix interior of the fuel assembly, i.e., surrounded by the channel 16. The full length fuel rods (FLR's) 20 extend between a lower support structure 22 and an upper support structure 24 in a well known manner, whereas partial length fuel rods (PLR's) 20' extend upwardly from the lower support structure 22 but terminate short of the upper support structure 24, just above spacer S₂ in the Figure.

The rods 20 (including PLR's 20') are normally arrayed in rows and columns. Further, and because of the length of the fuel assemblies (on the order of 4,06 m (160 inches), spacers, e.g., S₁, S₂...S_{N} are placed along the length of the fuel assembly to retain the fuel rods in the desired array and to minimize or eliminate lateral vibration of the fuel rods. Typically, seven or eight such spacers, axially spaced at predetermined intervals, extend from the top to the bottom of the fuel assembly.

The fuel rods 20 are generally arranged in a square (9x9, 10x10, etc.) matrix or array. A water rod 26 is shown in the middle of the array, also extending between the upper and lower support structures 24 and 22, but it is understood that more than one water rod may be employed.

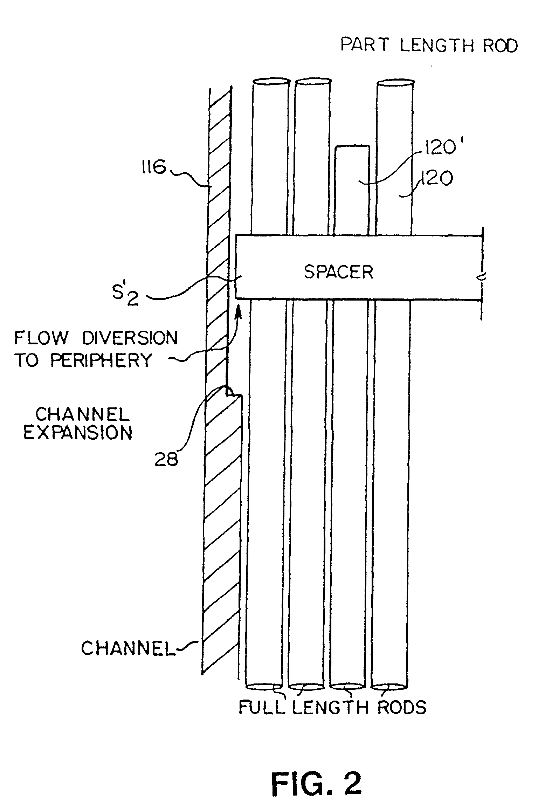

Turning now to Figure 2, an improved fuel bundle assembly in accordance with the present invention is illustrated. For convenience, reference numerals used in Figure 2 are similar to those used for corresponding components in Figure 1, but with the prefix "1" added.

As can be seen in Figure 2, the channel 116 undergoes a thickness change at a location where an internal shoulder 28 results in a smaller thickness dimension for the channel wall above the shoulder. This change in thickness creates an expanded interior channel volume in the upper region of the bundle in a manner similar to that described in commonly owned copending application Serial No. 08/655,875 (atty. dkt. 1585-165), filed May 29, 1996. At the same time, it will be noted that full length fuel rods or FLR's 120 are shown extending upwardly through the increased channel area and, conventionally to an upper support structure (not shown). It will also be noted that a part length fuel rod 120' is shown extending upwardly to a location above the spacer S₂'. In typical fuel bundle assemblies, there would be at least one additional spacer (see S₁ in Figure 1) above the spacer S₂' through which the FLR's 120 extend but which is located above the one or more PLR's 120'.

The critical relationship in accordance with this invention is that the channel expansion shoulder 28 is located below the spacer S₂' which is the uppermost spacer through which all of the FLR's 120 and PLR's 120' extend. In other words, the spacer S₂' is located axially below the tops of all PLR's in the bundle, but within the expanded channel area.

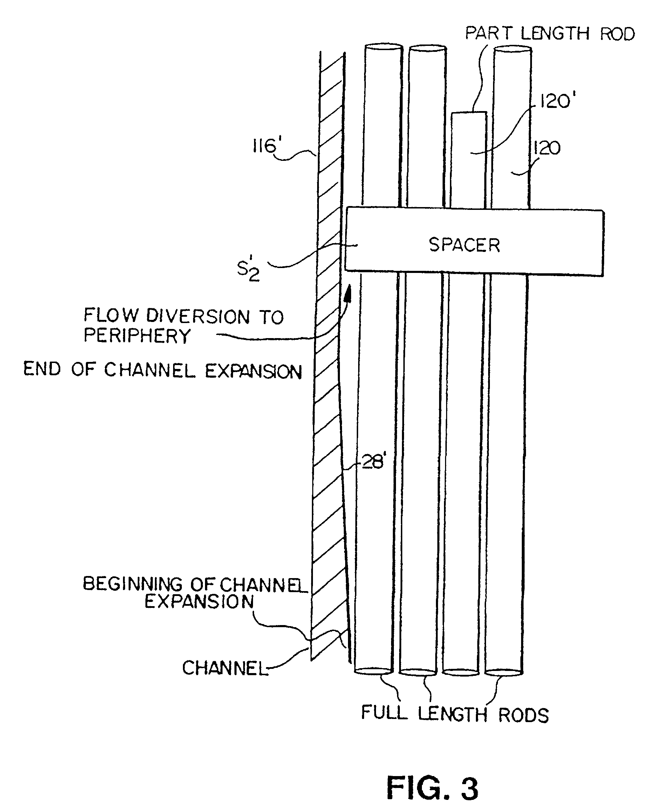

Turning now to Figure 3, another embodiment is disclosed wherein the channel expansion occurs over some axial length by reason of an axial taper in the channel 116' shown at 28'.

It will be understood that while channel expansion has been described above in terms of a single shoulder and as an axial taper, other expansion configurations are contemplated, such as, a series of small expansion steps over a predetermined axial length.

The above noted relationship of the channel expansion at 28 or 28' relative to that spacer which is the highest in the bundle through which all of the FLR's and PLR's extend, and the tops of the PLR's in the bundle, is necessary to achieve the critical power performance benefit discussed hereinabove. If all or part of the channel expansion is placed above the spacer S₂' or above the top of any PLR, then the openings above the PLR's provide low resistance flow passages in the interior of the bundle spacers, such that favorable flow diversion to the periphery will not be achieved.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A fuel bundle assembly (10) for a nuclear reactor comprising:
an elongated, open ended channel (116) having an interior flow area which is increased in an upper portion of the channel by means of a channel wall thickness change made in said upper portion;
a plurality of fuel rods in said channel including full length rods (120) extending substantially the length of the channel and at least one part length fuel rod (120') having an axial length shorter than said full length rods; and
a plurality of spacers (S_{N}) laterally supporting said full length fuel rods and said at least one part length fuel rod along respective axial lengths thereof, **characterized by** one of said spacers (S'₂) in an upward flow direction is the last spacer which supports said at least one part length fuel rod, said last of said spacers is located in an upper region of the channel above the channel wall thickness change made in said upper portion.

2. The bundle assembly of claim 1, wherein the bundle includes a plurality of part length fuel rods (120'), and wherein said last spacer supports all of said part length fuel rods (120') below but adjacent upper ends of said part length fuel rods.

3. The bundle assembly of claim 1 or 2, wherein said interior flow area increases by reason of an interior peripheral shoulder (28) in said channel.

4. The fuel bundle assembly of claim 1 or 2, wherein said flow area increases by reason of an interior axial taper (28') in said channel.

5. The fuel bundle assembly of claim 1 or 2, wherein said interior flow area increases over a predetermined axial length along interior surfaces of said channel.

6. The bundle assembly of any preceding claim, wherein said last spacer (S'₂) has other spacers on either side thereof in an axial direction.

7. The fuel bundle assembly of claim 6, wherein said last spacer has one spacer (S₁) above it in an axially upward direction.

8. The fuel bundle assembly of any preceding claim, wherein said full length fuel rods extend upwardly to an upper support structure (24).

9. A nuclear reactor including a reactor core, and a plurality of fuel bundle assemblies, each fuel bundle assembly according to any one of claims 1 to 8.

## Patentansprüche

1. Brennelement (10) für einen Kernreaktor, umfassend:
einen langgestreckten offenendigen Kanal (116) mit einem inneren Strömungsbereich, der in einem oberen Abschnitt des Kanales mittels einer in diesem oberen Abschnitt ausgeführten Änderung der Kanalwanddicke vergrößert ist;
eine Vielzahl von Brennstäben in dem Kanal mit Stäben (120) voller Länge, die sich im Wesentlichen über die Länge des Kanales erstrecken und mindestens einem Teillängenbrennstab (120'), dessen axiale Länge kürzer als die der Stäbe voller Länge ist;
eine Vielzahl von Abstandshaltern (S_{N}), die seitlich die Brennstäbe voller Länge und den mindestens einen Teillängenstab entlang entsprechenden axialen Längen davon abstützen,
**dadurch gekennzeichnet, dass** einer der Abstandshalter (S'₂) in einer nach oben gerichteten Strömungsrichtung der letzte Abstandshalter ist, der den mindestens einen Teillängenbrannstah abstützt, wobei der letzte dieser Abstandshalter in einer oberen Region des Kanales oberhalb der im oberen Abschnitt vorgenommenen Änderung der Kanalwanddicke angeordnet ist.

2. Brennelement nach Anspruch 1, das eine Vielzahl von Teillängenbrennstäben (120') einschließt, und worin der letzte Abstandshalter alle Teillängenbrennstäbe (120') unterhalb, aber benachbart den oberen Enden der Teillängenbrennstäbe abstützt.

3. Brennelement nach Anspruch 1 oder 2, worin der innere Strömungsbereich aufgrund einer inneren peripheren Schulter (28) in dem Kanal zunimmt.

4. Brennelement nach Anspruch 1 oder 2, worin der Strömungsbereich aufgrund einer inneren axialen Neigung (28') in dem Kanal zunimmt.

5. Brennelement nach Anspruch 1 oder 2, worin der inneren Strömungsbereich über eine vorbestimmte axiale Länge entlang inneren Oberflächen des Kanales zunimmt.

6. Brennelement nach einem vorhergehenden Anspruch, worin der letzte Abstandshalter (S'₂) in einer axialen Richtung andere Abstandshalter auf jeder Seite davon aufweist.

7. Brennelement nach Anspruch 6, worin der letzte Abstandshalter in einer axial nach oben weisenden Richtung einen Abstandshalter (S₁) darüber aufweist.

8. Brennelement nach einem vorhergehenden Anspruch, worin sich die Brennstäbe voller Länge bis zu einer oberen Stützstruktur (24) nach oben erstrecken.

9. Kernreaktor mit einem Reaktorkern und einer Vielzahl von Brennelementen, wobei jedes Brennelement gemäß einem der Ansprüche 1 bis 8 ausgebildet ist.

## Revendications

1. Assemblage de faisceaux de combustible (10) pour un réacteur nucléaire, comprenant :
un canal à extrémité ouverte allongé (116) comportant une zone d'écoulement intérieure qui est accrue dans une partie supérieure du canal grâce à un changement d'épaisseur de paroi de canal réalisé dans ladite partie supérieure ;
une pluralité de barres de combustible dans ledit canal, comprenant des barres de pleine longueur (120) s'étendant sensiblement sur la longueur du canal et au moins une barre de combustible de longueur partielle (120') ayant une longueur axiale plus courte que celle desdites barres de pleine longueur ; et
une pluralité de dispositifs d'espacement (S_{N}) supportant latéralement lesdites barres de combustible de pleine longueur et ladite barre de combustible de longueur partielle au nombre d'au moins une le long de longueurs axiales respectives de celles-ci, **caractérisé en ce que** l'un desdits dispositifs d'espacement (S'₂) dans une direction d'écoulement vers le haut est le dernier dispositif d'espacement qui supporte ladite barre de combustible de longueur partielle au nombre d'au moins une, ledit dernier desdits dispositifs d'espacement étant disposé dans une région supérieure du canal au-dessus du changement d'épaisseur de paroi de canal réalisé dans ladite partie supérieure.

2. Assemblage de faisceaux selon la revendication 1, dans lequel le faisceau comprend une pluralité de barres de combustible de longueur partielle (120'), et dans lequel ledit dernier dispositif d'espacement supporte la totalité desdites barres de combustible de longueur partielle (120') en dessous mais au voisinage des extrémités supérieures desdites barres de combustible de longueur partielle.

3. Assemblage de faisceaux selon la revendication 1 ou 2, dans lequel ladite surface d'écoulement intérieure augmente en raison d'un épaulement périphérique intérieur (28) dans ledit canal.

4. Assemblage de faisceaux de combustible selon la revendication 1 ou 2, dans lequel ladite surface d'écoulement augmente en raison d'un effilement axial intérieur (28') dans ledit canal.

5. Assemblage de faisceaux de combustible selon la revendication 1 ou 2, dans lequel ladite surface d'écoulement intérieure augmente sur une longueur axiale prédéterminée le long de surfaces intérieures dudit canal.

6. Assemblage combustible selon l'une quelconque des revendications précédentes, dans lequel ledit dernier dispositif d'espacement (S'₂) comporte d'autres dispositifs d'espacement de chaque côté de celui-ci dans une direction axiale.

7. Assemblage de faisceaux de combustible selon la revendication 6, dans lequel ledit dernier dispositif d'espacement comporte un dispositif d'espacement (S₁) au-dessus de celui-ci dans une direction axialement vers le haut.

8. Assemblage de faisceaux de combustible selon l'une quelconque des revendications précédentes, dans lequel lesdites barres de combustible de pleine longueur s'étendent vers le haut vers une structure de support supérieure (24).

9. Réacteur nucléaire comprenant un coeur de réacteur, et une pluralité d'assemblages de faisceaux de combustible, chaque assemblage de faisceaux de combustible étant selon l'une quelconque des revendications 1 à 8.
